# EUROPEAN PATENT APPLICATION

(11) **EP 2 819 070 A1**
(43) Date of publication of application: **31.12.2014**
(21) Application number: 13305898.2
(22) Date of filing: 27.06.2013
(51) Int. Cl.: G06Q 10/06

(54) **Method for updating a project task board database**

(71) Applicant: Orange, 75015 Paris (FR)
(72) Inventor: Chaudhry, Kashif, London, SW16 5SR (GB); Szirtes, Thomas, London, E15 4EN (GB)

(57) **Abstract**

Present invention relates to a method for updating a project entry in a project task board database, the project entry comprising a plurality of tasks, each task being associated to a predetermined machine readable tag, the method being executed by a server and comprising the acts of receiving an image of a project task board, the project task board comprising one or more task cards placed on the task board, each task card showing a machine readable tag, processing the image to locate and identify one or more of the machine readable tags, retrieving the tasks corresponding to the identified one or more machine readable tasks, calculating a position in the task board of the retrieved tasks using the location of the corresponding machine readable tag in the image, storing in the project entry of the project task board database the retrieved tasks in association with their calculated location.

## Description

### FIELD OF THE PRESENT SYSTEM:

The present invention relates generally to managing a project entry in a project task board database, more particularly to the updating of the project entry in the project task board database.

### BACKGROUND OF THE PRESENT SYSTEM:

Agile software development is a group of software development methods based on iterative and incremental development, where requirements and solutions evolve through collaboration between self-organizing, cross-functional teams (*Wikipedia*)*.*

Agile methods rely on small task increments with minimal planning and do not directly involve long-term planning. The different tasks are allocated to team members, and a follow-up of the status of the tasks is performed by a project manager.

In such Agile software development method it is common to track the different tasks status using a SCRUM board. Such SCRUM board comprises a list of tasks organized in columns to represent task status often presented through physical tickets stuck to the board (e.g. "to be done", "on-going", "done"). There are many virtual task boards on the market (e.g. Trello™, ScrumDo™, System One™, etc.) but most team members still prefer the experience of moving the physical tickets around on a real task board (or project board) than digital ones. However digital systems are more efficient for the project management follow-up. Indeed, digital systems allow for example automatic tracking of the rate of progress or creation of reporting.

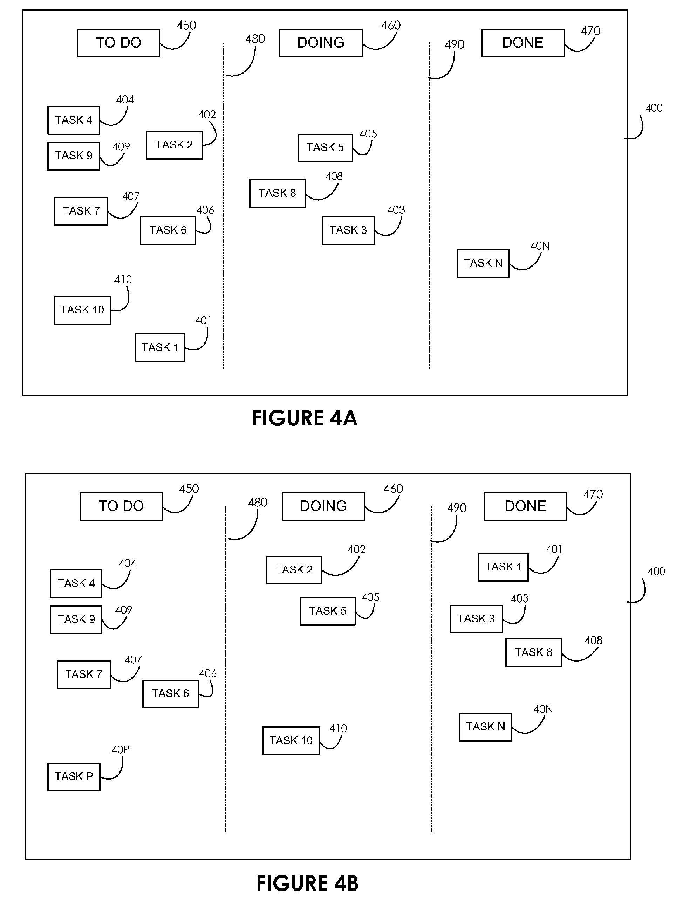

FIG. 4A and 4B are illustrations of an exemplary SCRUM board or project task board used during a team meeting. FIG. 4A is the status of the project task board at the beginning of a project meeting, while FIG. 4B is the status of the project task board at the end of the project meeting. The project task board 400 is typically a whiteboard as usually installed in meeting room. But project task board 400 may be any other type of physical board or even a sheet of paper. Project task board 400 may be installed vertically along a wall, a support or horizontally on a table. For illustration purpose, the project task board is here divided into three zones 450, 460 and 470 along a vertical axis (in other words, in three columns). It should be understood that the division of the project task board may be made using others criteria (along a horizontal axis or using uneven size of the columns/lines for example). The N tasks of the project are represented on physical tickets like task cards 401 to 40N. A task card is typically a poSt-it™ or any other piece of paper, card that can be stuck or laid on the project task board 400. Names of the different task of the project are written on the task cards (e.g., task card 40N corresponds to task "task N").

During the project meeting, the project manager will update the status of the project by moving the different task cards corresponding to the project tasks according to the new status of the tasks. For example here, from FIG. 4A to FIG. 4B, task cards 2 (402) and 10 (410) have been moved from column 450 to column 460, meaning that the two tasks 2 and 10 statuses have been updated from "to do" to *"doing"* (i.e. "on-going" task). Task cards 403 and 408, corresponding respectively to tasks 3 and 8 have been moved from column 460 to column 470, indicating that the tasks 3 and 8 have been completed ("done"). It is to be noted that a task card can be moved directly from column 450 to column 470, as illustrated by task card 401. In this example, between the previous project meeting and actual project meeting, the task 401 has been completed, meaning here for example that in the previous project meeting the task 401 has not been allocated or started (which would have been corresponding to status "doing", that is to say column 460) but between the time interval of the two project meetings, the task 401 has been allocated and completed.

It is also to be noted that new tasks can appear during a project meeting, as illustrated in FIG. 4B, task card 40P, corresponding to a new task P. This means that a new task P has been identified during the project meeting and the task status has been identified (or tagged) as "to do" (in this example). In some cases, it could be possible to have a new task directly tagged as completed. Still, for reporting purpose, the project manager may want the task to appear on the project task board.

At the end of the meeting, the project manager needs to update manually the entry of the virtual project task board (also called project management task board database, project task board database or, in short, project database). The project manager needs to identify each card task that has been moved during the meeting, retrieve the corresponding task (by reading the task name on the task card), edit the entry corresponding to the task in the project database by updating the task status according to the new location of the task card, meaning according to which column the task card is placed into.

Thus, today, in order to conciliate the preference of team members to manage the tasks on a physical task board and the advantages of having a project management via a project management software, the project manager has to manually update the entry of the project within the project management database, which is a tedious and repetitive work, especially when there is a high number of tasks to manage.

Indeed, there is a need to improve the management of a project entry in a project task board database, more particularly to improve the updating of the project entry in a project task board database.

### SUMMARY OF THE PRESENT SYSTEM:

It is an object of the present system to overcome disadvantages and/or make improvements in the prior art.

*The present system relates to a method for updating a project entry in a project task board database, the project entry comprising a plurality of tasks, each task being associated to a predetermined machine readable tag, the method being executed by a server and comprising the acts of receiving an image of a project task board, the project task board comprising one or more task cards placed on the task board, each task card showing a machine readable tag, processing the image to locate and identify one or more of the machine readable tags, retrieving the tasks corresponding to the identified one or more machine readable tasks, calculating a position in the task board of the retrieved tasks using the location of the corresponding machine readable tag in the image, storing in the project entry of the project task board database the retrieved tasks in association with their calculated location..*

This advantageously suppresses the burden for a project manager of updating manually a project entry in a project task board database after a project meeting. Indeed, by using task card comprising machine readable tag, the project manager can replace all the previous manual steps of the updating of the project entry in a project task board database by the simple step of sending a photo of the task board (that is to say an image) to a server. Using image processing techniques, the server identifies the different task cards in the received image, from their machine readable tags, locates the task card on the task board and stores the plurality of identified tasks and their respective location in the project entry of the project database. This advantageously allows the project manager to have directly a digital version of a project task board, removing the need of writing up from the physical task board a digital version into the project entry of the project task board database.

*In a complementary embodiment of present system, wherein each task is associated to a location, the act of storing comprises the acts of retrieving a project entry in the project task board database and updating tasks in the project entry for which the location has changed.*

This embodiment alleviates further the burden of the project manager as an existing project entry in a project task board database may be automatically updated.

*In a complementary embodiment of present system, the act of storing comprises the acts of determining from the location in the task board of a given task parameters associated to the given task, and storing these parameters in the project entry of the task board database.*

Advantageously, the system may directly determine from the location of a task card a parameter associated to a task. Taking for example situation described in FIG. 4A and 4B, the status of a task, corresponding to the location of an associated task card o the task board, in other words, the positioning of the task card among the three columns 450, 460 or 470, may be automatically determined by the system. Using this complementary embodiment, the task 1 corresponding to the task card 401 would be automatically updated from "to do" status to "completed" status

*In a further embodiment of present system, the machine readable tag associated to a task is a barcode or a QR code.*

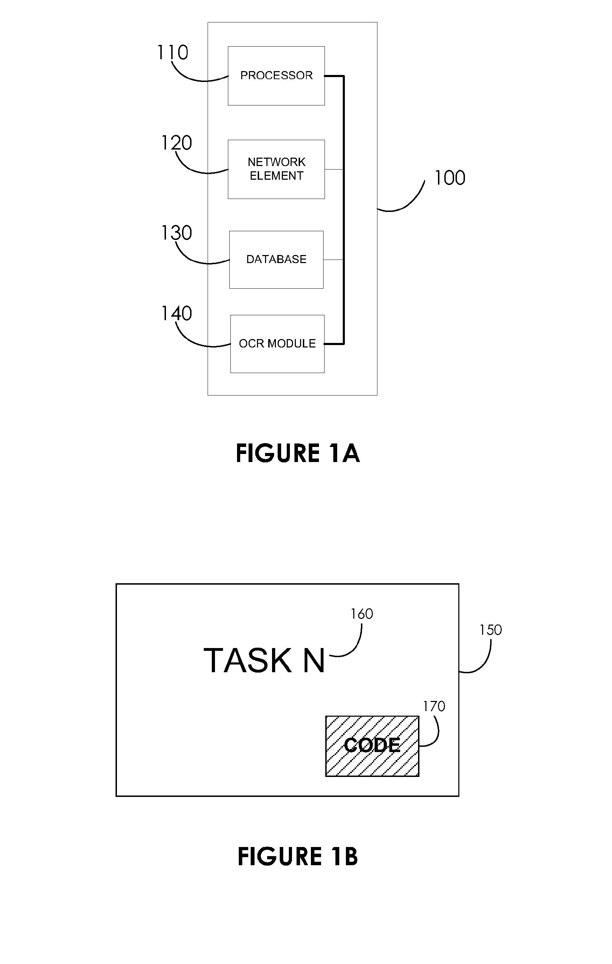

This embodiment facilitates the image processing, using task card with such machine-readable code 170 like barcode or QR code as machine-readable tag as shown in FIG. 1B.

In a complementary embodiment of present system, the step of calculating the position comprises a step of identifying zones of a predefined type in the image of the project task board.

Generally, task cards on the physical board are classified into columns or rows, or both, each columns or rows corresponding to a certain parameter such as for example the status of a task or the owner of the task. Advantageously present system identifies such zone (columns and/or rows for example) and locates the task cards within said zones, thus facilitating greatly the act of positioning the task cards.

In a further complementary embodiment of present system, the step of identifying and locating the one or more machine readable tags comprises a step of identifying a predefined shape associated to the task cards.

The act of processing the image may advantageously comprise a step of shape recognition, thus facilitating the recognition of the task board and the plurality of the task cards within the image.

In a further embodiment of present system, when no task is retrieved corresponding to an identified machine readable tag, a new task is created in the project entry in association with the identified machine readable tag.

Thus, when the system identifies a machine readable tag within the image with no corresponding task, the system may automatically deduce that a new task is to be created in the project entry in association with the machine readable tag. A project manager may thus easily manage the apparition of new task in a project. When placing an unused task card on the task board, the system will detect that the machine readable tag of the task card does not correspond to an existing task in the project entry, deduce that a new task should be created in the project entry and further launch a task creation process, possibly in interaction with the project manager.

The present system also relates to a project task board database server with means to implement the method of present system.

Finally, one object of the invention concerns a computer program, in particular computer programs on or in an information medium or memory, suitable for implementing the method for managing access to a social network from a mobile device object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1A shows an exemplary embodiment of a server in accordance with present system;
FIG. 1B shows an exemplary illustration of a task card in accordance with present system;
FIG. 2 shows an exemplary illustration of a use case of updating a project task board database in accordance with an embodiment of the present system;
FIG. 3 shows an exemplary flowchart for updating a project task board database according to an embodiment of the present method;
FIG. 4A and 4B show an exemplary illustration of a project task board.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

According to one embodiment of present system, a method can be implemented via applications or computer programs executed by a server 100. For clarity sake, it should be understood hereafter that writing "the server does something" means "the application executed on the server does something". Just like, "the application does something" should be understood as "the application executed by the server does something".

FIG. 1A is an illustration of an exemplary server 100 used in the present system. The server 100 comprises at least a processor 110, a network element 120, a database 130 and an image processing module 140.

The processor 110 can execute any applications or computer programs according to the embodiments of the present system. The man skilled in the art knows that processor 100 may comprise various processors or rely on distributed processor elements, possibly linked via the network element 120.

In one embodiment of present system, a project software (or virtual task board software) is executed by the processor 110.

The network element 120 may comprise one or various network module, each module providing network connectivity to the server 100. The network element 120 may comprise wireless or wireline network modules, such as Wi-Fi or Ethernet network modules. These network modules may be used to set-up connectivity to a local network and/or possibly Internet, or may be used to set-up peer-to-peer connectivity with another electronic equipment comprising necessary network module. For example, the network element 120 may be used to set-up a connection to Internet for the server 100 via an Ethernet or Wi-Fi network module, or to set-up a direct peer-to-peer connection to a mobile device via for example a Bluetooth or USB network module.

The server 100 comprises a database 130. In the context of the system, the database 130 is a project task board database, meaning that information or data related to a project task board are stored in a project entry within the database 130. The man skilled in the art knows that the database 130 may be hosted within the server 100, or possibly may be hosted on another or several servers, possibly using a solution such as a cloud database, the server 100 accessing the database 130 through its network element 120. For clarity sake, present description shall focus on a database 130 comprised within the server 100, but alternative embodiment with a distributed or remote database are possible.

A project entry, corresponding to a project, may comprise a plurality of task associated to the project, each task being associated to various parameters. Such parameters could for example the name of the task, a status associated to the task (task progress for example), the name of the person in charge of the task and so on. As shown in the exemplary illustration of present system in FIG. 4A and 4B, there could be a direct relation between the status of a task (in other word, a parameter associated to a task) and the position of the task card associated to the task on the task board. Indeed, in the FIG. 4A and 4B, the status of a task is linked to the position of the corresponding task board in the different zones - here columns - separated by the (virtual) delimitation 480 and 490. In other words, the columns headed by the headers 450, 460 and 470 contains task cards corresponding to task which status correspond here to the header itself. For example, task card 403, associated to task 3, is located in FIG. 4A within the zone or column "DOING" (as the header of the column is 460), meaning that the status of task 3 is "doing", or, in other words, that a parameter associated to task 3 in the project entry of the project task board database is set or should de updated to "doing". Here, the parameter associated to the task would represent the progress of said task.

In another complementary embodiment of present system, the task board (already divided by columns, respectively rows) may advantageously also be divided or delimited using rows (respectively columns), leading to a task board matrix. This would advantageously allow positioning the different task cards according to a second parameter associated to a task. Indeed, the location a task card in a row of the task board may be associated to a first parameter of the task, when the location of the same task card in a column may be associated to a second parameter of the task.

The image processing module 140 comprises means for an electronic conversion of scanned images of handwritten, typewritten or printed text into machine-encoded text. In short, the image processing module 140 receives as an input an image, possibly a scanned text or an image and outputs a digitalized version of the text recognized in the scanned text or image. More globally, we will consider here that the image processing module of present system also comprises means to recognize any optical machine-readable representation of data, such as for example barcode or QR code. In other words, the image processing module 140 can extract from an image a digitalized version of a text present in the image and can also decode any optical machine-readable code such as barcode or QR code present in the image.

Hereafter, the expression machine readable tag may be used indifferently for any text (handwritten, typewritten, printed, drawn ...) present in an image or for an optical machine-readable code such as a barcode or a QR code. In short, a machine readable tag can be anything that the Image processing module 140 of present system can take as an input and decode, meaning recognizing the text in the first case or decoding an optical machine-readable code in the second case. In both case, the output of the Image processing module 140 is data that can be stored, possibly in the database 130, accordingly to the processor 110 instructions.

FIG. 1B is an illustration of a task card 150. Today, a task card 150 is typically a post-it or any other small sheet of paper with some adhesive tape, so the task card can be stuck to a project task board, and possibly moved from one position to another (i.e. unstuck and stuck at another position) during a project meeting. The task card is associated to a task, the name of the task being advantageously written on the task card 150 as shown in 160 (160 being a text zone on the task card 150).

The machine-readable code 170 may be present on the task card 150 in some embodiment of present system. The role of the code machine-readable 170 is to facilitate the image processing performance by the Image processing module 140, advantageously by using machine-readable code 170 such as barcode or QR code. Also, using machine-readable code 170 on a task card 150 reduces the complexity of the image processing task, thus allowing for cheaper Image processing module 140 to be implemented in the server 100. Indeed, in one embodiment of present system, the Image processing module 140 may be directly integrated within the processor 110 for cost of efficiency motives. This machine-readable code 170 is not present on a task card 150 according to existing techniques as described before.

Indeed, the predetermined machine readable tag of the claimed system may be in one embodiment the text contained in the text zone 160, in this case possibly the task name itself, or in a complementary embodiment a machine-readable code 170, the machine-readable code 170 being possibly a barcode or a QR code associated to a task. In fact, 160 can be any handwritten, typewritten, printed, or drawn text that is associated to a task, possibly an understandable name corresponding to a task, an acronym of a task, a drawing (possibly a geometric form) or any text associated to a task.

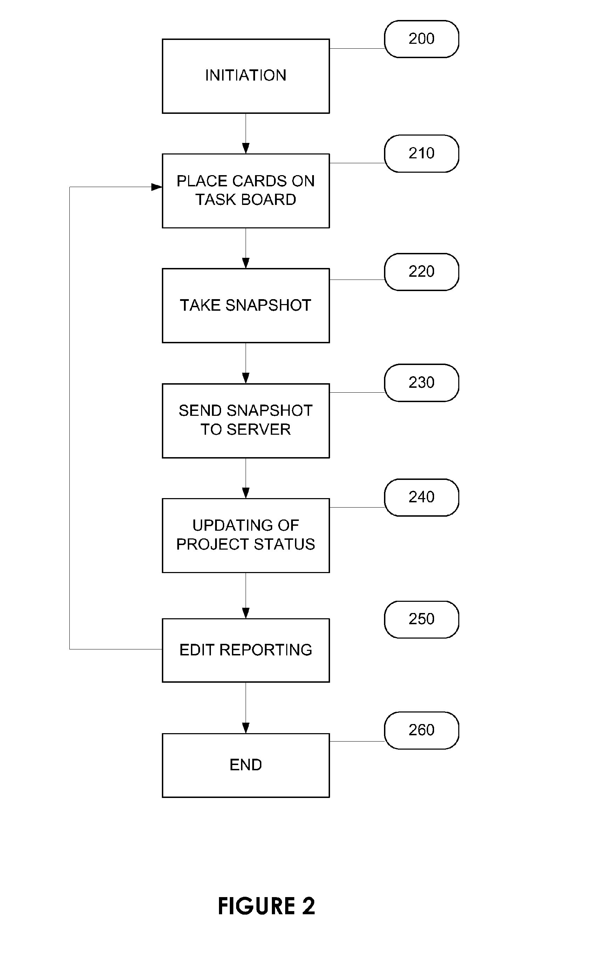

FIG. 2 shows an exemplary illustration of a use case of updating a project entry in a project task board database in accordance with present system.
FIG. 2 describes the different acts that a project manager should follow according to an embodiment of present system.

In a first step 200, the system should be initiated. Virtual task board software (or project software) should be initialized in association with a project, this project being the project that is going to be followed during different project meeting. An entry in the project task board database is created for the project. Project tasks to be followed are to be created by the project manager in the project entry of the project task board database. A predetermined machine readable tag is associated to each task in the project entry of the project task board database:
- In one embodiment of present system, a machine readable tag is generated, automatically or using some manual inputs, by the project software. This is advantageously the case when a barcode or QR code is created, or retrieved from a preset database of code, and associated to each project task. In this case, the predetermined machine readable tag is a machine readable code (barcode or QR code for example)), and a machine readable code is associated to a task.
- In another embodiment of present system, a machine readable tag is generated from the task name, or from any other parameter associated to a task in the project task board database. In this case, it could be for example an acronym generated from the task name. This machine readable tag should be written or printed on the task card to be used later on the task board. In this case, the predetermined machine readable tag is any element that once processed during the image processing step allows the identification of a task. The element may be for example a text or a drawing. If the predetermined machine readable tag is a text, it should be understood that it is the content of the text that make the machine readable tag more than the way said text is written or printed on a task card. Indeed, once a predetermined machine readable tag is associated to a task, for example a certain text, it is the recognition of said text on a task card during the image processing that will allow identification of the machine readable tag. In other words, if a predefined readable tag like a text (for example "TASK 4") is associated to a task (for example, the task 4), it is the writing or the printing of such text on a task card (for example task card 404) that will constitute the machine readable tag on the task card. Indeed, image processing of the image, more precisely of the task card in the image, will allow retrieving said text or machine readable tag.

In the step 200, task cards corresponding to the tasks of the project should be generated. Advantageously, the project software may control a printing device to generate said task cards. The task cards may comprise in one embodiment of present system a machine-readable code 170 corresponding to a machine readable tag such as a barcode or a QR code.

In this first initiation step 200, all tasks in the project entry of the project task board database may be initiated to a same status such as "undone", "to be affected", "to be completed", or "to do" (non limiting list of examples). It should be understand that the status of a task is a parameter associated to a given task and stored within the project entry of the project task board database. Optionally, the project manager may decide or set-up manually a status associated to a task, for reporting reason for example if said task is already completed or on-going when initiating the project entry of the project task board database.

In one complementary embodiment of present system, cards corresponding to the status of the tasks are also printed, as shown in FIG. 4A and 4B (see cards 450, 460 and 470). In FIG. 4A and 4B, cards 450, 460 or 470 could be seen as identifying three zones, delimited - virtually or not - by the separation 480 and 490 ; for this reason, hereafter. Hence, for simplicity sake, the zone corresponding to the header or card 450 is called hereafter zone 450, and so on.

In another complementary embodiment of present system, the task cards 150 may be specially crafted and provided for the project task board software, including for example pre-existing machine-readable code 170 embedded on the task card 150. The task card 150 may also comprise fixation features such as for example a magnetized back in order to stick them easily on magnetic board.

Once this initiation step 200 completed, the project manager has at his disposal a project entry in a project task board database, the project entry comprising a plurality of tasks, each task being associated to a predetermined machine readable tag as well as a task card for every tasks. The task card comprises a machine readable tag (that is to say that the machine readable tag is printed on the task card 150) associated to a task, this tag could be the text zone 160 (comprising the task name or an acronym for example) or, advantageously, a machine-readable code 170 such as a barcode or a QR code.

During a project meeting, in a step 210, the project manager begins by placing the different tasks cards on the task board, i. e., the physical task board (for example by sticking them to a board, disposing them on a table ...). FIG. 4A is an illustration of such situation. Each task is located on the task board according to its status. The project manager, when placing the task cards on the task board, should take care that the location of the task cards corresponds to the status of the tasks in the project task board database. Thus, advantageously, the project manager may leave the task cards on the project task board from one meeting to another.

During the project meeting, the task cards are moved by the project manager (or any project member) from one location to another according to the new status of the task (new status here meaning that the status of the task may have changed since the previous project meeting), as illustrated by the differences between the FIG. 4A and FIG. 4B.

At the end of the project meeting, instead of having to manually update the project entry in the project task board database, as in existing project software, the project manager will take a snapshot of the task board (step 220) and send it to the server 100 hosting the project software (step 230). From this, the project software executed by the server 100 will automatically update the project entry in the project task board database, as described hereafter.

In the step 220, the project manager will advantageously take a snapshot of the task board using a mobile phone, as a mobile phone usually combines nowadays good quality cameras and network connectivity necessary for the step 230.

In the step 230, the taken snapshot, that is to say the image of the task board, is sent to the server 100. Method to send the image to the server are numerous, from sending directly from a mobile phone via MMS or e-mail, to connecting the camera to the server 100 via USB, or any other technique known by the man skilled in the art.

When receiving an image, the server 100 will update the project entry in the project task board database in a step 240. This step 240 may necessitate some validation or control from the project manager, or may be totally automatic.

Advantageously, the project manager may in a step 250 edit a reporting of the advancement of the project or generate any needed statistics.

Possibly, in a step 260, the project entry in the project may be closed, when for example the related project is completed. In this case, the project entry in the project task board database may be archived. This step may allow further re-using of previously used predetermined machine readable tag, particularly if task cards are provided with the project software.

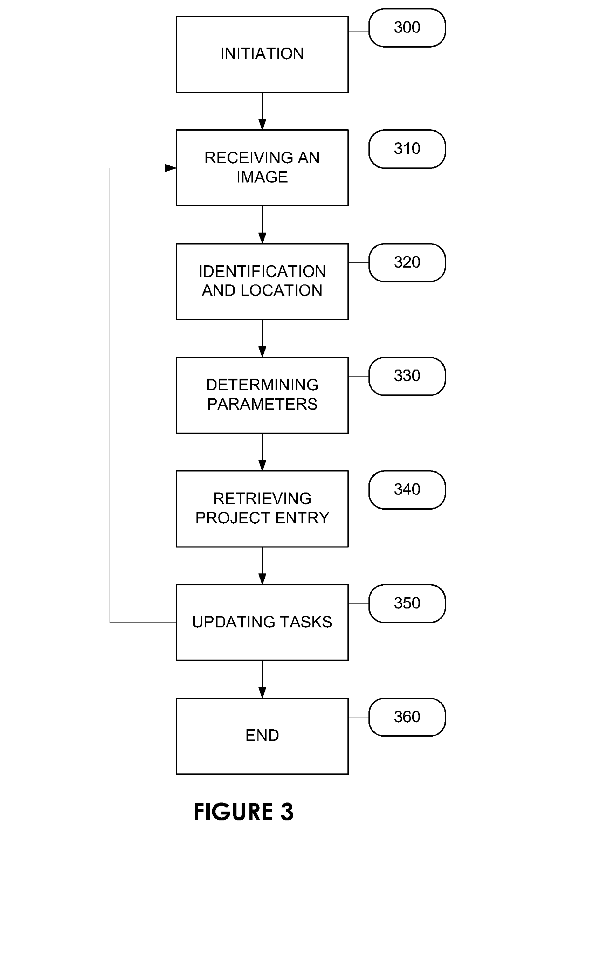

FIG. 3 shows an exemplary flowchart for updating a project entry in a project task board database according to an embodiment of the present method. The flowchart is described from the point of view of the server 100 executing a project software according to present system.

The first initiation step 300 corresponds to the step 200. This step may include a step of downloading and installing a project software on the server 100, a step of creation of a project task board database and the creation of a project entry in the project task board database. If the project task board database is hosted on another server or within the cloud, some initiation steps (such as authentication) may be necessary to set-up the access to the project task board database from the server 100.

As seen in the description of step 200, the step 300 comprises the creation of a plurality of tasks, each task being associated to a predetermined machine readable tag in the project entry of the project task board database. In an alternative embodiment of present method, this step may be automated by receiving an image of a (physical) task board (such as shown in FIG. 4A or FIG. 4B), using image processing technique to identify a plurality of tasks based on possibly predetermined machine-readable code 170 (when for example using a project software and associated pre-coded task cards) or based on the text 160 written on the task cards 150. Otherwise, the project manger needs to manually input in the project entry of the project task board database the plurality of tasks and insure that each task is associated to a predetermined machine readable tag.

At the end of the initiation step 300, the project entry in the project task board database comprises a plurality of tasks, each task being associated to a predetermined machine readable tag and the system is ready to proceed according to the present system. Possibility, some parameters are associated to a task in the project entry of the project task board database, like for example, but not limited to, the status of the task, a priority, the owner of the task, a target deadline....

In a step 310, the server 100 is receiving an image. The image is the image (or snapshot) taken and sent by the project manager in the steps 220 and 230 of FIG. 2. FIG. 4A or FIG. 4B are illustration of such image. It is to be noted that the different zone are here illustrated as "status" of the tasks, but the system may be used focusing on other parameters such as "owner" of a task. In this case, headers 450, 460 and 470 may correspond to the different project team member's names. More generally, in alternative embodiment of present system, headers 450, 460 and 470 may correspond to any parameter associated to a task in the project task board database. In FiG. 4A and 4B, three zones are shown as columns, but more zones could be used, as columns or rows, or both. In this last case, the task board is organized as a matrix. For example, columns may correspond to the status of a task while rows may correspond to the owner of the task.

In a step 320, the server 100 is using an image processing technique to identify and locate the plurality of tasks based on their associated machine readable tag. The image processing technique is advantageously implemented by an Image processing module 140, but could be implemented using processor 110, or by combining a processor 110 and an Image processing module 140. For illustrative sake, it will be considered hereafter that the image processing technique is implemented via an Image processing module 140.

From the received image, the Image processing module 140 identifies and locates the plurality of tasks based on their associated machine readable tags. In one embodiment of present system, machine readable tags used correspond to the text zones 160. Then, the Image processing module 140 will "read" a said text zone 160 and retrieve the task corresponding to the retrieved name (i.e. retrieved text in text zone 160) of the task, quite possibly by comparing the retrieved text with the name of the task. In other embodiment of present system, the machine readable tag corresponds to an acronym, some text code written in the text zone 160, for example written text in capitalized letter as to facilitate the image processing or a drawing.

In another embodiment of present system, the machine readable tag associated to a task is a barcode or a QR code, for example as shown in FIG. 1B, machine-readable code 170.

Identifying a task should be understood here as retrieving from a recognized machine readable tag on a task card, using an image processing technique, the corresponding task associated in the project entry of the project task board database. Possibly, image processing technique may comprise some form recognition steps as to improve and facilitate the image processing. Indeed, by using form recognition technique, the image processing module 140 may identify the plurality of task cards in the image and point or even limit the image processing to said identified task cards in order to retrieve machine readable tag more efficiently. When no task is retrieved corresponding to an identified machine readable tag, a new task is created in the project entry in association with the identified machine readable tag.

Locating a task should be understood here as determining in which zone on the (physical) task board the task card corresponding to the machine readable tag associated with a task is located. Form recognition technique may be used during the image processing by the image processing module 140. Particularly, it is may be useful, using said form recognition technique, to identify in a first step within the received image the task board 400. Once recognized, the relative positioning of the recognized task board 400 and of the plurality of task cards 4xx determines the location of the plurality of task cards 4xx.

Location of a task card could be determined according to the relative positioning of said task card comparing to the task board 400 or comparing to the headers 450, 460 and 470, or comparing to both.

In the illustrative embodiment of FIG. 4A and 4B, headers 450, 460 and 470 represent three columns.

For example, from the illustrative task board shown on FIG. 4A, identifying the task 5 means retrieving the associated task "TASK 5" (making here the hypothesis that the text zone 160 corresponds exactly to the task name) from the task card 405, using image processing technique, and locating the task 5 means determining that the corresponding task card 405 is located within the zone of the task board corresponding to the header 460.

In one alternative embodiment of present system, there may be no header such as 450, 460 or 470 on the task board. In this case, locating a task card may correspond to positioning the task card on the task board relatively to some criteria. For example, locating could mean determining the relative location of a task card 150 relatively to the edge of the task board. This location could in this case, and for illustrative purpose only, been retrieved as a percentage, zero percent meaning next to the left edge and one hundred percent meaning next to the right edge of the task board. In one complementary embodiment, such location may thus visually represent the advancement or progress of a task (from "not started", corresponding to zero percent or the left edge of the task board to "completed" or one hundred percent, on the right edge of the task board). More generally, the server 100 may determine from the location of a task a parameter associated with the task.

Thus, in a step 330, the system may determine from the location of a given task parameters associated to the given task. In one embodiment of present system, the server 100 may store in the project entry of the project task board database 130 the plurality of identified tasks and their respective location, in another complementary embodiment of present system, the server 100 may also store these parameters in the project entry of the project task board database.

In a step 340, step that in fact could be executed before, after or during the steps 320 and 330, the server 100 may need to determine which project entry of the project task board database is concerned. This is particularly true if the project task board database is storing a plurality of project entries relating to various projects. Indeed, the project software may be used by various project managers and/or to manage various projects.

If the image received by the server is received through e-mail, the server may determine the concerned project entry according to, for example, the object of the mail, some text added by the project manager when sending the mail, or a dedicated e-mail address for a project entry. In one complementary embodiment of present system, the server may eventually check some credentials before executing the different steps of the method, preventing some unauthorized access to or update of a project entry in the project task board database. The credentials may be inserted within the e-mail. Eventually, only e-mails corresponding to certain criteria may be authorized (for example, only e-mail sent from the project manager mail account may be authorized).

If the image is sent by Multimedia Messaging Service (MMS) from a mobile phone, the project manager may need to complement the MMS with some information as the project name or credentials. Possibly, calling and/or called phone number may be criteria to identify a project among the various projects.

Once the concerned project has been identified, the server 100 retrieves a stored project entry in the project task board database, meaning the project entry associated to said project.

Then, in a step 350, the server 100 store in the project entry of the project task board database the plurality of identified tasks and their respective location, or if the retrieved project entry of the project task board database already contains the plurality of tasks, the server 100 update the tasks for which the location has changed. Indeed, the server 100 uses some image processing techniques, possibly comprising form recognition technique, to identify within the received image the task board, and locate the plurality of task cards relatively to said task board. Possibly, the task board is divided in columns and/or rows. In this case, a changed of location means that a task card has been moved in the task board from one column to another, from one row to another, or possibly both.

As seen previously, the server 100 may determine from the location of a given task parameters associated to the given task. In this case, the server 100 may store these parameters in the project entry of the project task board database in association with the said tasks, or possibly update these parameters.

Step 360 corresponds to the step 260 of FIG. 2, possibly comprising act of closing or archiving a project entry of the project task board database.

FIGs. 4A and 4B have been previously described.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system to update a project task board database may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for updating a project entry in a project task board database, the project entry comprising a plurality of tasks, each task being associated to a predetermined machine readable tag, the method being executed by a server and comprising the acts of:
- receiving an image of a project task board, the project task board comprising one or more task cards placed on the task board, each task card showing a machine readable tag,
- processing the image to locate and identify one or more of the machine readable tags,
- retrieving the tasks corresponding to the identified one or more machine readable tasks,
- calculating a position in the task board of the retrieved tasks using the location of the corresponding machine readable tag in the image,
- storing in the project entry of the project task board database the retrieved tasks in association with their calculated location.

2. A method according to claim 1, wherein each task is associated to a location, the act of storing comprises the acts of:
- retrieving a project entry in the project task board database and,
- updating tasks in the project entry for which the location has changed.

3. A method according to claims 1 or 2, wherein the act of storing comprises the acts of:
- determining from the location in the task board of a given task parameters associated to the given task, and;
- storing these parameters in the project entry of the task board database.

4. A method according to any preceding claims, wherein the machine readable tag associated to a task is a barcode or a QR code.

5. A method according to any of the preceding claims, wherein the step of calculating the position comprises a step of identifying zones of a predefined type in the image of the project task board.

6. A method according to any of the preceding claims, wherein the step of identifying and locating the one or more machine readable tags comprises a step of identifying a predefined shape associated to the task cards.

7. A method according to any of the preceding claims, wherein when no task is retrieved corresponding to an identified machine readable tag, a new task is created in the project entry in association with the identified machine readable tag.

8. A server managing a project entry in a project task board database, the project entry comprising a plurality of tasks, each task being associated to a predetermined machine readable tag, the server comprising means for implementing the method of claim 1.

9. A server according to claim 8, the server further comprising means for:
- retrieving a stored project entry and,
- updating tasks for which the location has changed

10. A server according to claims 8 or 9, the server further comprising means for:
- determining from the location of a given task parameters associated to the given task, and;
- storing these parameters in the task board database in association with the project entry.

11. An application embodied on a non-transitory computer readable medium and arranged to execute the method of claims 1 to 7.
